Europäisches Patentamt

European Patent Office

Office européen des brevets

(19)

(11) Veröffentlichungsnummer : **0 152 512**
**B1**

(12) EUROPÄISCHE PATENTSCHRIFT

(45) Veröffentlichungstag der Patentschrift :
08.07.87

(21) Anmeldenummer : 84103708.8

(22) Anmeldetag : 04.04.84

(51) Int. Cl.⁴ : **F 16 L 37/20**, F 16 L 23/02

(54) Klammer zum Gegeneinanderdrücken zweier Profilschienen.

(30) Priorität : 06.02.84 CH 540/84

(43) Veröffentlichungstag der Anmeldung :
28.08.85 Patentblatt 85/35

(45) Bekanntmachung des Hinweises auf die Patenterteilung : 08.07.87 Patentblatt 87/28

(84) Benannte Vertragsstaaten :
**AT BE CH DE FR GB IT LI LU NL SE**

(56) Entgegenhaltungen :
DE-B- 1 046 964
GB-A-   382 069
US-A- 2 701 148

(73) Patentinhaber : **Schmidlin AG**
**Zürichstrasse 19**
**CH-8910 Affoltern a.A. (CH)**

(72) Erfinder : **Schmidlin, Walter**
**Mühlrütistrasse 12**
**CH-8910 Affoltern a.A. (CH)**

(74) Vertreter : **Scheidegger, Zwicky, Werner & Co.**
**Stampfenbachstrasse 48 Postfach**
**CH-8023 Zürich (CH)**

EP 0 152 512 B1

**Beschreibung**

Die Erfindung betrifft eine Klammer zum Gegeneinanderdrükken zweier Profilschienen mit im wesentlichen U-förmigem Querschnitt, insbesondere zum lösbaren Verbinden stumpf aneinander anschliessender und mit durch Profilschienen versteiften Verbindungsflanschen versehener Lüftungskanäle.

Für die Flanschverbindung von Lüftungskanälen sind verschiedene Lösungsvorschläge bekannt, bei denen es sich in der Regel um die besondere Ausbildung von Profilschienen handelt, die an den Enden von Lüftungskanälen anzubringen sind, beispielsweise ·durch Punktschweissung oder Nietung, und in die starre Eckwinkelstücke eingeschoben werden, durch die hindurch zwei an den Enden in dieser Weise gleich ausgebildete Kanäle verschraubt werden. Verbindungen dieser Art sind in den schweizerischen Patenten No. 495 523 und No. 536 969 beschrieben.

Eine feste gegenseitige Verbindung der Flansche ist aber insbesondere bei langen Seitenkanten der Lüftungskanäle auch zwischen den Eck-· verschraubungen notwendig, insbesondere wenn die Kanalverbindung vollkommen abgedichtet sein muss. Dieses Problem ist jedoch bisher noch nicht auf genügend praktische und einfache Art gelöst worden. Aus der schweizerischen Patentschrift No. 528 682 ist zwar eine zum Verschrauben in beliebigen Längsabständen geeignete Profilschiene bekannt, die eine in einen nutenförmigen Kragen am Kanalende passende geschlossene Bördelung und eine mit dieser Bördelung über einen Steg verbundene, ebenfalls geschlossene Bördelung aufweist, womit diese Profilschiene eine zum Kanalende hin offene U-Form mit den beiden Bördelungen als Schenkel bildet, sodass zwei mit der offenen Seite gegeneinander zeigende Profilschienen an den miteinander zu verbindenden Kanalenden bei gegenseitiger Anlage der aussen befindlichen Bördelungen durch die Stege dieser Profilschienen hindurch verschraubt werden können. Diese bekannte Profilschiene weist ein grosses Materialvolumen auf, und ist aufgrund der vielen Abbiegungen in der Herstellung teuer. An einem rechtwinkligen Abbug oder einem nutenförmigen Kragen an den Enden der Seitenwände eines im Querschnitt rechteckförmigen Lüftungskanals lässt sich mit besonderem Vorteil eine neuartige Profilschiene anfügen, die im Querschnitt U-förmig ausgebildet ist und zwei gefalzte Schenkel aufweist. Die Profilschiene wird mit dem die Schenkel verbindenden Steg gegen den hochstehenden Abbug am Ende des Kanals zur Anlage gebracht. Sofern ein weiterer zurückgebogener Kragenrand an dem Kanalende vorhanden ist, wird dieser von dem gefalzten Schenkel der Profilschiene umfasst, und ausserdem besitzt dieser Schenkel der Profilschiene eine einwärts vorspringende Sicke und der zweite gefalzte Schenkel einen einwärts vorspringenden Endabbug, womit diese Profilschiene geeignet ist, zwischen dem Endabbug des einen gefalzten Schenkels und der Sicke am anderen gefalzten Schenkel einerseits und dem Steg andererseits ein hineingeschobenes Eckwinkelstück aufzunehmen, welches zum Verschrauben eines anschliessenden, in der gleichen Weise ausgebildeten Kanalendes dient.

Der vorliegenden Erfindung liegt die Aufgabe zugrunde, mit den vorstehend beschriebenen Profilschienen oder in ähnlicher Weise ausgestalteten, im Querschnitt U-förmigen Profilschienen versehene Kanalenden auch zwischen den Eckverschraubungen längs der Kanalseitenwand fest gegeneinander flanschen zu können, ohne Verschraubungen zu verwenden, wobei eine absolute Dichtheit der Kanalverbindung gewährleistet sein soll. Dafür sind die Kanalenden mit ausreichendem Druck gegeneinander zu pressen.

Diese Aufgabe wird durch eine erfindungsgemässe Klammer mit den Merkmalen gemäss Anspruch 1 gelöst. Der hohe Druck wird dabei dadurch erreicht, dass die Klammer durch Hebelwirkung in ihre Schliesstellung gebracht wird. Der Vorteil der Klammer besteht darin, dass sie die im Querschnitt U-förmigen Profilschienen an ihren Stegen zusammenpresst und nicht nur die äusseren Profilschienenschenkel zusammenhält. Von besonderem Vorteil ist ferner, dass die Klammer an jeder beliebigen Stelle und schnell montierbar ist und ebenso einfach wieder entfernt werden kann. Ein weiterer Vorteil besteht darin, dass bei nicht genau fluchtend gegeneinander liegenden Kanalenden durch das Aufsetzen und Schliessen der Klammer die Profilschienen und damit die aneinander anschliessenden Kanalwände in eine genau fluchtende Lage gebracht werden.

Weitere Einzelheiten und Vorteile der Erfindung ergeben sich aus der nachfolgenden Beschreibung und den Zeichnungen, in denen die Erfindung beispielsweise dargestellt ist.

Es zeigen :

Figur 1  die Klammer in der Schliesstellung in Seitenansicht ;

Figur 2  die Klammer gemäss Fig. 1 in Draufsicht ;

Figur 3  die geöffnete Klammer in schaubildlacher Darstellung.

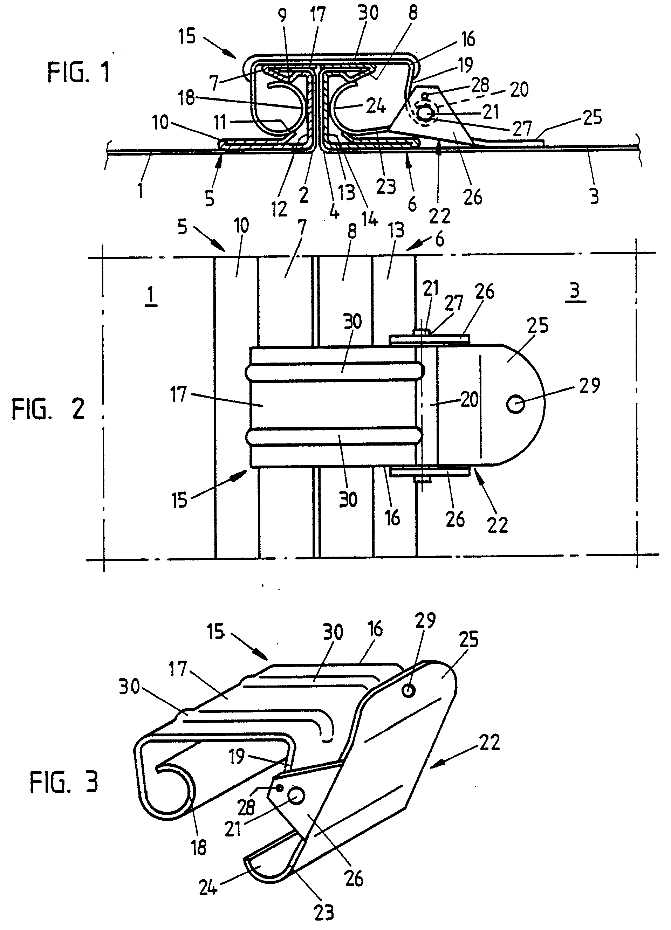

Gemäß Fig. 1 weist eine abgebrochen dargestellte Kanalseitenwand 1 am Ende einen nutenförmigen Kragen 2 auf. Die Seitenwand 3 eines anzuschliessenden Kanalabschnitts weist am Ende einen gleich ausgebildeten nutenförmigen Kragen 4 auf, der durch zweimaliges rechtwinkliges Abbiegen gebildet ist. In den nutenförmigen Kragen 2 ist eine im Querschnitt im wesentlichen U-förmige Profilschiene 5 und in den nutenförmigen Kragen 4 eine gleich ausgebildete Profilschiene 6 eingeschoben, wobei der gefalzte obere Schenkel 7 der Profilschiene 5 zwischen den beiden Blechlagen des Schenkels den zurückgebogenen Rand des nutenförmigen Kragens 2 aufnimmt. Bei der Profilschiene 6 ist der obere gefalzte Schenkel 8 ebenso ausgebildet. Der obere Schenkel 7 der Profilschiene 5 besitzt ferner innenseitig eine Sicke 9 und der ebenfalls gefalzte untere Schenkel 10 der Profilschiene 5 weist am inneren Ende eine hochgebogene Endkante 11 auf, sodass zwischen dieser Endkante 11 und der Sicke 9 einerseits und dem die beiden Schenkel verbindenden Steg 12 der Profilschiene ein in der Zeichnung nicht dargestelltes Eckwinkelstück zum Verschrauben der beiden Kanalenden eingeschoben werden kann.

Die andere Profilschiene 6 ist gleich ausgebildet und weist einen unteren gefalzten Schenkel 13 und einen den Schenkel 13 mit dem oberen Schenkel 8 verbindenden Steg 14 auf.

Zum Gegeneinanderdrücken der beiden Profilschienen 5 und 6 ist eine insgesamt mit 15 bezeichnete Klammer über die beiden in einer Ebene liegenden Schenkel 7 und 8 der beiden Profilschienen 5 und 6 auf diese aufgesetzt. Die Klammer 15 besteht aus einem im Querschnitt im wesentlichen U-förmigen ersten Teil 16 aus federndem Material, vorzugsweise aus Federstahl, welches Teil einen Steg 17 und zwei Schenkel 18 und 19 aufweist. Der Schenkel 18 ist zu einem runden Wulst einwärts zurückgebogen. Am Ende des anderen Schenkels 19 ist in einem nach auswärts zurückgebogenen Endrand 20, der in Fig. 1 gestrichelt dargestellt ist, eine Schwenkachse 21 befestigt, die parallel zur Ebene des Stegs 17 der Klammer 15 verläuft. Mittels der Schwenkachse 21 ist das erste Teil 16 der Klammer 15 mit einem zweiten Teil 22 schwenkbeweglich verbunden, welches als zweiarmiger Hebel ausgebildet ist, dessen im Bezug auf das U-förmige erste Teil 16 einwärts gerichteter Hebelarm 23 am Ende zu einem runden Wulst 24 einwärts zurückgebogen ist, und dessen anderer flächiger Hebelarm 25 als Handhabe für die Schwenkbetätigung und als Schwenkbegrenzungsanschlag dient, wobei dieser Hebelarm 25 in der Schliesstellung der Klammer gemäss Fig. 1 gegen die Aussenseite der Kanalwand 3 anliegt.

Der Wulst 18 am ersten Teil 16 und der Wulst 24 am zweiten Teil 22 der Klammer 15 sind in Bezug auf die Grösse des Radius dieses im wesentlichen kreisförmig gebogenen Wulstes derart ausgebildet, dass der Wulst 18 sowohl gegen den Steg 12 wie auch gegen die beiden Schenkel 7 und 10 der Profilschiene 5 längs Berührungslinien angedrückt ist und in der gleichen Weise der Wulst 24 des zweiten Teils 22 sowohl gegen den Steg 14 wie auch gegen die beiden Schenkel 8 und 13 der Profilschiene 6 angedrückt ist. Die Berührungslinien zwischen jedem der beiden Stege 12 und 14 und dem jeweiligen Wulst 18 und 24 bzw. die Krümmungsmittelpunkte vom Wulst 18 und vom Wulst 24 liegen auf einer zum Steg 17 der Klammer 15 mindestens annähernd parallelen Linie, deren Abstand vom Steg 17 kleiner ist als der Abstand der Schwenkachse 21 vom Steg 17, wenn die Klammer 15 sich in der Schliesstellung gemäss Fig. 1 befindet. Anderenfalls würde die Klammer nicht in der Schliessstellung verbleiben. Da die beiden federnden Schenkel der Klammer mit dem Wulst 18 und dem Wulst 24 gegen die beiden Profilschienen 5 und 6 an jeweils drei Stellen angedrückt sind, werden die beiden Profilschienen beim Aufsetzen der Klammer auch zueinander ausgerichtet, falls sie sich vorher nicht genau in gleicher Höhe befanden, und werden die Profilschienen vor allem auf der Mitte gegeneinander gepresst, sodass eine in der Zeichnung nicht dargestellte Dichtung zwischen den beiden Profilschienen zusammengedrückt wird und die Kanalverbindung zuverlässig dicht ist.

Der als zweiarmiger Hebel ausgebildete zweite Teil 22 der Klammer 15 weist an gegenüberliegenden Längsseiten hochgebogene Wangen 26 mit einer Bohrung 27 auf, durch die sich die Schwenkachse 21 hindurch erstreckt. In den beiden Wangen 26 ist ferner noch eine zweite Bohrung 28 ausgebildet, durch die sich ein an der Aussenseite des Schenkels 19 des ersten Teils 16 der Klammer 15 längsverlaufender Sicherungsstift, der in der Zeichnung nicht dargestellt ist, hindurch gesteckt werden kann und der bei der in der Schliesstellung befindlichen Klammer gemäss Fig. 1 eine Schwenkbewegung des beweglichen Teils 22 der Klammer und damit ein unberechtigtes Oeffnen der Klammer verhindert. Eine andere Möglichkeit, um das Oeffnen und Wegnehmen der Klammer zu verhindern, besteht darin, den gemäss Fig. 2 mit einer Bohrung 29 versehenen Hebelarm 25 des schwenkbaren Teils 22 der Klammer an der Kanalseitenwand 3 beispielsweise durch einen Niet zu befestigen.

Der Steg 17 der Klammer ist mit zwei von dem einen zum gegenüberliegenden Schenkel der Klammer sich erstreckenden Sicken 30 versehen, um die Federkraft zu erhöhen.

## Patentansprüche

1. Klammer zum Gegeneinanderdrücken zweier Profilschienen mit im wesentlichen U-förmigem Querschnitt, insbesondere zum lösbaren Verbinden stumpf aneinander anschliessender und mit durch Profilschienen versteiften Verbindungsflanschen versehener Lüftungskanäle, dadurch gekennzeichnet, dass die zum Aufsetzen auf die in einer Ebene liegenden Schenkel (7, 8) von zwei mit den Aussenseiten ihrer Stege (12, 14) einander zugewandten Profilschienen (5, 6) bestimmte Klammer (15) aus einem aus federndem Material bestehenden, im Querschnitt im wesentlichen U-förmigen ersten Teil (16), welches einen Steg (17) und zwei Schenkel (18, 19) aufweist, von denen ein Schenkel zu einem runden Wulst (18) einwärts zurückgebogen ist, und aus einem an dem Ende des anderen Schenkels (19) mittels einer zur Ebene des Stegs (17) der Klammer (15) parallelen Schwenkachse (21) schwenkbar befestigten zweiten Teil (22) besteht, welches als zweiarmiger Hebel (23, 24, 25) ausgebildet ist, dessen in Bezug auf das U-förmige erste Teil (16) einwärts gerichteter Hebelarm (23, 24) am Ende zu einem runden Wulst (24) einwärts zurückgebogen ist und dessen anderer flächiger Hebelarm (25) als Handhabe für die Schwenkbetätigung und als Schwenkbegrenzungsanschlag dient, wobei in der Schliesstellung der Klammer (15) die Krümmungsmittelpunkte vom am ersten Teil (16) der Klammer ausgebildeten Wulst (18) und vom am zweiten Teil (22) ausgebildeten Wulst (24) auf einer zum Steg (17) der Klammer (15) mindestens annähernd parallelen Linie liegen, deren Abstand vom Steg (17) kleiner als der Abstand der Schwenkachse (21) vom Steg (17) der Klammer (15) ist.

2. Klammer nach Anspruch 1, dadurch gekennzeichnet, dass der Wulst (18) des ersten Teils (16) und der Wulst (24) des zweiten Teils (22) der Klammer (15) bezüglich der Grösse des Radius des Wulstes derart ausgebildet ist, dass in der Schliesstellung der auf zwei Profilschienen (5, 6) aufgesetzten Klammer (15) jeder Wulst (18, 24) jeweils gegen den Steg (12, 14) und die beiden Schenkel (7, 8 ; 8, 13) einer Profilschiene (5, 6) längs je einer Berührungslinie angedrückt ist.

3. Klammer nach Anspruch 1, dadurch gekennzeichnet, dass der Steg (17) von dem einen zum gegenüberliegenden Schenkel (18, 19) sich erstreckende Sicken (30) zur Erhöhung der Federkraft der Klammer (15) aufweist.

4. Klammer nach Anspruch 1, dadurch gekennzeichnet, dass die Schwenkachse (21) in einem nach auswärts zurückgebogenen Endrand (20) des Schenkels (19) des ersten Teils (16) der Klammer (15) gelagert ist und der als zweiarmiger Hebel ausgebildete zweite Teil (22) der Klammer (15) an gegenüberliegenden Längsseiten einstückig anschliessende hochgebogene Wangen (26) mit je einer Bohrung (27) aufweist, durch die sich die Schwenkachse (21) zwecks Lagerung hindurch erstreckt.

5. Klammer nach Anspruch 4, dadurch gekennzeichnet, dass die zur Lagerung dienenden Wangen (26) je eine zweite Bohrung (28) aufweisen, durch die ein an der Aussenseite des Schenkels (19) des ersten Teils (16) der Klammer (15) längsverlaufender Sicherungsstift hindurch steckbar ist, der eine Schwenkbewegung des als zweiarmiger Hebel ausgebildeten Teils (22) der Klammer (15) und damit ein unberechtigtes Oeffnen der Klammer verhindert.

6. Klammer nach Anspruch 1, dadurch gekennzeichnet, dass beide Teile (16, 22) der Klammer (15) aus Federstahl bestehen.

## Claims

1. A clamp for pressing together two profiled rails with a substantially U-shaped cross-section, in particular for the detachable connection of butt-joined ventilation ducts having connecting flanges reinforced by profiled rails, characterised in that the clamp (15) which is intended for mounting on the legs (7, 8) lying in a plane, of two profiled rails (5, 6) with the outsides of their webs (12, 14) facing each other, comprises a first part (16) of springy material with a substantially U-shaped crosssection, having a web (17) and two legs (18, 19), one of which (18) is bent back inwards to form a round bead, and an angularly adjustable second part (22) fixed to the end of the other leg (19) by means of a pivoting axis (21) parallel to the plane of the web (17) of the clamp (15), the second part being formed as a double-armed lever (23, 24, 25), whose lever arm (23, 24) directed inwards towards the Ushaped first part (16) is bent back inwards at the end to form a round bead (24) and whose other flat lever arm (25) serves as both a handle for the pivoting operation and a pivoting limit stop, such that, with the clamp (15) in the closed position, the centres of curvature of the bead (18), formed on the first part (16) of the clamp, and of the bead (24) formed on the second part (22) lie on a line, at least roughly parallel to the web (17) of the clamp (15), the lines distance from the web (17) being less than the distance of the pivoting axis (21) from the web (17) of the clamp (15).

2. A clamp according to claim 1, characterised in that the bead (18) of the first part (16) and the bead (24) of the second part (22) of the clamp (15) are formed, regarding the magnitude of the radius of the bead, such that, when the clamp (15) mounted on two profiled rails (5, 6) is in the closed position, each bead (18, 24) is pressed along a respective contact line against the web (12, 14) and both the legs (7, 8 ; 8, 13) of a respective profiled rail (5, 6).

3. A clamp according to claim 1, characterised in that the web (17) of the clamp has a fin (30) extending from one leg to that opposite (16, 19) in order to improve the resilience of the clamp (15).

4. A clamp according to claim 1, characterised in that the pivoting axis (21) is supported in an outwardly bent back end rim (20) of the leg (19) of the first part (16) of the clamp (15), and the second part (22) of the clamp (15), formed as a double-arm lever, has integral turned-up cheeks (26) on opposite longitudinal sides, each with a hole (27) through which the pivoting axis (21) extends, thereby providing a bearing.

5. A clamp according to claim 4, characterised in that the cheeks (26) serving as a bearing each have a second hole (28), through which a lock pin may be inserted along the outside of the leg (19) of the first part (16) of the clamp (15), thereby preventing any slewing motion of that part (22) of the clamp (15) formed as a double-arm lever, and hence unauthorised opening of the clamp.

6. A clamp according to claim 1, characterised in that both parts (16, 22) of the clamp (15) are of spring steel.

## Revendications

1. Agrafe pour presser l'un contre l'autre deux rails profilés ayant une section transversale sensiblement en forme d'un U, notamment pour le raccordement amovible de canaux d'aération se suivant bout à bout et pourvus de brides de raccordement renforcées par des rails profilés, caractérisée en ce que l'agrafe (15) destinée à être posée sur les branches (7, 8) situées dans un plan de deux rails profilés (5, 10), qui sont orientés l'un vers l'autre par les côtés extérieurs de leur âme (12, 14) se compose d'une première partie (16) réalisée en un matériau élastique et ayant une section transversale sensiblement en forme d'un U et comportant une barrette ou âme (17) et deux branches (18, 19) dont l'une est repliée en arrière vers l'intérieur pour former un bourrelet rond, et d'une deuxième partie (22) fixée de façon pivotante à l'extrémité de l'autre branche (19) au moyen d'un axe de pivotement parallèle au plan de l'âme (17) de l'agrafe (15) et qui est conformée en levier (23, 24, 25) à deux bras dont le bras de levier (23, 24) orienté vers l'intérieur par rapport à la première partie en forme de U (16) est replié en arrière vers l'intérieur sous forme d'un bourrelet rond (24) et dont l'autre bras de levier (25) présentant une surface sert d'organe de manipulation pour l'actionnement en pivotement et de butée de limitation du pivotement, les points de milieu de courbure dans la position de fermeture de l'agrafe (15) du bourrelet formé sur la première partie (16) de l'agrafe et du bourrelet (24) formé à la deuxième partie (22) sont situés sur une ligne au moins approximativement parallèle à l'âme (17) de l'agrafe (15), dont la distance de l'âme (17) est inférieure à la distance de l'axe de pivotement (21) de l'âme (17) de l'agrafe (15).

2. Agrafe selon la revendication 1, caractérisée en ce que le bourrelet (18) de la première partie (16) et le bourrelet (24) de la deuxième partie (22) de l'agrafe (15) sont conformés par rapport à la grandeur du rayon du bourrelet de telle manière que dans la position de fermeture de l'agrafe (15) placée sur deux rails profilés (5, 6) chaque bourrelet (18, 24) est respectivement pressé contre l'âme (12, 14) et les deux branches (7, 8 ; 8, 13) d'un rail profilé (5, 6) sont pressées chacune le long d'une ligne de contact.

3. Agrafe selon la revendication 1, caractérisée en ce que l'âme (17) comprend des nervures ou moulures (30) qui s'étendent d'une branche à la branche située en regard (18, 19) pour l'augmentation de la force de ressort de l'agrafe (15).

4. Agrafe selon la revendication 1, caractérisée en ce que l'axe de pivotement (21) est logé dans un bord extrême (20) replié en arrière vers l'extérieur de la première branche (19) de la première partie (16) de l'agrafe (15) et que la deuxième partie (22) conformée en levier à deux bras de l'agrafe (15) comporte des joues (26) repliées vers le haut et faisant suite en étant de pièce à des côtés longitudinaux situés en regard et pourvues chacune d'un alésage (27) à travers lesquels l'axe de pivotement (21) s'étend en vue de son logement.

5. Agrafe selon la revendication 4, caractérisée en ce que les joues (26) pour le logement comprennent chacune un deuxième alésage ou trou (28) à travers lesquels une goupille de sécurité peut être enfichée, qui s'étend le long du côté extérieur de la branche (19) de la première partie (16) de l'agrafe (15) et empêche un mouvement de pivotement de la partie (22) conformée en levier à deux bras de l'agrafe (15) et ainsi une ouverture injustifiée de l'agrafe.

6. Agrafe selon la revendication 1, caractérisée en ce que les deux parties (16, 22) de l'agrafe (15) sont réalisées en acier à ressort.

FIG. 1

FIG. 2

FIG. 3